# NOUVEAU FASCICULE DE BREVET EUROPEEN

(11) **EP 2 709 863 B2**
(45) Date de publication et mention de la décision concernant l'opposition: **29.06.2022**
(45) Mention de la délivrance du brevet: 29.08.2018
(21) Numéro de dépôt: 12718680.7
(22) Date de dépôt: 04.05.2012
(51) Int. Cl.: B60H 1/00, B60H 1/03

(54) **APPAREIL DE CHAUFFAGE, VENTILATION ET/OU CLIMATISATION COMPRENANT UN CANAL DE CIRCULATION D'AIR CONTOURNANT UN ÉCHANGEUR DE CHALEUR**
HEIZUNGS-, KLIMA- UND LÜFTUNGSTECHNISCHE VORRICHTUNG MIT EINEM EINEN WÄRMETAUSCHER UMGEHENDEN LUFTSTRÖMUNGSKANAL
HEATING, VENTILATION AND/OR AIR-CONDITIONING APPARATUS INCLUDING AN AIR FLOW CHANNEL BYPASSING A HEAT EXCHANGER

(30) Priorité: 20.05.2011 FR 1101550
(43) Date de publication de la demande: 26.03.2014
(73) Titulaire: Valeo Systèmes Thermiques, 78320 La Verriere (FR)
(72) Inventeur: WITTMANN, Klaus, F-78320 Le Mesnil Saint Denis (FR); YAHIA, Mohamed, F-75005 Paris (FR)
(74) Mandataire: Valeo Systèmes Thermiques
(86) Numéro de dépôt international: PCT/EP2012/058303
(87) Numéro de publication internationale: WO 2012/159872

(56) Documents cités:
- DE-A1- 2 941 183
- DE-A1- 2 941 183
- DE-B3- 10 336 248
- DE-B3- 10 336 248
- FR-A1- 2 706 816
- FR-A1- 2 706 816
- FR-A1- 2 769 262
- US-A- 5 309 731
- US-A1- 2002 117 296
- US-A1- 2002 117 296
- US-A1- 2003 056 531
- US-A1- 2003 056 531
- US-A1- 2008 245 088
- US-A1- 2008 245 088
- US-B1- 6 311 763
- US-B1- 6 311 763

## Description

Le secteur technique de la présente invention est celui des installations de chauffage, ventilation et/ou climatisation pour véhicule automobile.

Un véhicule automobile est classiquement équipé d'une boucle de climatisation, ou circuit de fluide réfrigérant, à l'intérieur de laquelle circule un fluide réfrigérant. La boucle de climatisation comprend, notamment, un compresseur, un échangeur de chaleur extérieur, un organe de détente et un évaporateur parcourus par le fluide réfrigérant.

Par ailleurs, selon certains agencements particuliers, la boucle de climatisation comprend également un refroidisseur de gaz intérieur, notamment un condenseur intérieur, parcouru par le fluide réfrigérant. Dans une telle configuration, l'évaporateur et le refroidisseur de gaz intérieur sont installés dans un boîtier d'un appareil de chauffage, ventilation et/ou climatisation, généralement monté dans un habitacle du véhicule. Le boîtier permet de canaliser un flux d'air intérieur, préalablement à être distribué dans l'habitacle du véhicule. Le flux d'air intérieur peut être chaud, froid ou tempéré en fonction d'une demande d'un utilisateur du véhicule. Par ailleurs, l'échangeur de chaleur extérieur est généralement disposé en face avant du véhicule, afin d'être traversé par le flux d'air extérieur au véhicule.

Selon cette configuration particulière, la boucle de climatisation peut être utilisée selon divers modes de fonctionnement, notamment dans un mode dit "refroidissement" et dans un mode dit "chauffage".

Dans le mode dit "refroidissement", le fluide réfrigérant est mis en circulation par le compresseur et est envoyé vers l'échangeur de chaleur extérieur. L'échangeur de chaleur extérieur se comporte alors comme un condenseur, ou refroidisseur de gaz, dans lequel le fluide réfrigérant est refroidi par le flux d'air extérieur. Par suite, le fluide réfrigérant circule vers l'organe de détente, dans lequel il subit un abaissement de pression, avant d'entrer dans l'évaporateur. Dans l'évaporateur, le fluide réfrigérant est chauffé par le flux d'air intérieur, destiné à être diffusé dans l'habitacle. Corrélativement, le flux d'air intérieur est refroidi, à la traversée de l'évaporateur, afin d'abaisser la température de l'habitacle du véhicule. La boucle de climatisation étant un circuit fermé, le fluide réfrigérant retourne ensuite vers le compresseur.

Dans le mode dit "chauffage", le fluide réfrigérant est mis en circulation par le compresseur et est envoyé vers le refroidisseur de gaz intérieur. Dans le refroidisseur de gaz intérieur, le fluide réfrigérant est refroidi par le flux d'air intérieur, circulant dans le boîtier de l'appareil de chauffage, ventilation et/ou climatisation. Corrélativement, le flux d'air intérieur est chauffé à la traversée du refroidisseur de gaz intérieur, afin d'augmenter la température de l'habitacle du véhicule. Par suite, le fluide réfrigérant circule vers l'organe de détente, dans lequel il subit un abaissement de pression, avant d'entrer dans l'échangeur de chaleur extérieur. L'échangeur de chaleur extérieur se comporte alors comme un évaporateur, dans lequel le fluide réfrigérant est chauffé par le flux d'air extérieur. Le flux d'air extérieur est, par conséquent, refroidi à la traversée l'échangeur de chaleur extérieur. La boucle de climatisation étant un circuit fermé, le fluide réfrigérant retourne ensuite vers le compresseur.

Le mode dit "chauffage" est requis dans des conditions climatiques froides, c'est-à-dire lorsque la température du flux d'air extérieur est basse. Dans le mode dit "chauffage", il est connu de prélever une partie d'un flux d'air provenant de l'habitacle, ou flux d'air recyclé, afin de constituer le flux d'air intérieur. En effet, la charge thermique imposée par assurer le chauffage du flux d'air recyclé est réduite en comparaison de la charge thermique imposée par assurer le chauffage d'un flux d'air provenant de l'habitacle provenant de l'extérieur, ou flux d'air extérieur, puisque la température du flux d'air recyclé provenant de l'habitacle est supérieure à la température du flux d'air extérieur. Ainsi, le cycle thermodynamique opéré par la boucle de climatisation requiert moins d'énergie pour chauffer le flux d'air recyclé provenant de l'habitacle. Une telle configuration est obtenue en fermant une entrée d'air pour le flux d'air extérieur, ou entrée d'air extérieur, du boîtier de l'appareil de chauffage, ventilation et/ou climatisation et en ouvrant une entrée d'air pour le flux d'air recyclé, ou entrée d'air recyclé, du boîtier de l'appareil de chauffage, ventilation et/ou climatisation.

Une telle configuration du boîtier de l'appareil de chauffage, ventilation et/ou climatisation présente cependant un inconvénient. En effet, il n'est pas possible d'utiliser uniquement le flux d'air recyclé dans le mode dit "chauffage", car il existe un risque d'embuage des vitres de l'habitacle. En effet, la présence des passagers dans l'habitacle contribue à charger le flux d'air recyclé en humidité qui, après un certain temps d'utilisation, se condense sur les vitres dès lors que la température à l'extérieure du véhicule permet d'atteindre le point de rosée.

Bien qu'il soit souhaitable d'alléger la charge thermique de la boucle de climatisation en maximisant la quantité de flux d'air recyclé utilisé, on comprend que l'humidité résiduelle du flux d'air recyclé limite une telle utilisation. Dans cette situation, il est connu d'activer la boucle de climatisation dans le mode dit "refroidissement", afin de déshumidifier et refroidir le flux d'air recyclé par la traversée l'évaporateur.

Toutefois, le mode dit "refroidissement" entraîne un abaissement de la température du flux d'air intérieur, constitué par une admission du flux d'air recyclé dans le boîtier de l'appareil de chauffage, ventilation et/ou climatisation. Ceci impose donc de fournir une énergie additionnelle nécessaire pour réchauffer le flux d'air intérieur à un niveau acceptable pour le confort des passagers du véhicule, préalablement à la distribution du flux d'air intérieur dans l'habitacle. Au global, il existe donc une consommation d'énergie pour refroidir et assécher agencée de sorte à ce que le boîtier de l'appareil de chauffage, ventilation et/ou climatisation loge deux échangeurs de chaleur fonctionnant en tant qu'organes de chauffage du flux d'air intérieur. Or, pour certains fluides réfrigérants, en particulier pour des fluides réfrigérants sur-critiques, tels que le fluide réfrigérant connu sous la dénomination R744A ou CO2, la charge thermique peut être réduite. Toutefois, le bénéfice obtenu en réduisant la charge thermique est perdu par la dégradation de la performance de la boucle de climatisation.

Le but de la présente invention est donc de résoudre les inconvénients décrits précédemment en organisant un appareil de chauffage, ventilation et/ou climatisation de sorte à, d'une part, assécher le flux d'air intérieur en provenance de l'habitacle, et, d'autre part, autoriser l'entrée du flux d'air extérieur, sans le faire transiter au travers de l'évaporateur.

On évite ainsi l'apparition de buée sur les vitres de l'habitacle du véhicule. De plus, un tel agencement permet de limiter la consommation d'énergie nécessaire pour réchauffer le flux d'air.

Il s'en suit donc une limitation de la charge thermique de la boucle de climatisation. Une telle limitation est particulièrement intéressante pour limiter la quantité de chaleur extraite dans le flux d'air sans détériorer le coefficient de performance de la boucle de climatisation.

L'invention a donc pour objet un appareil de chauffage, ventilation et/ou climatisation pour un habitacle d'un véhicule automobile comprenant un boîtier comportant une première entrée d'air et une deuxième entrée d'air. Le boîtier canalise un flux d'air intérieur provenant de la première entrée d'air et/ou de la deuxième entrée d'air et loge au moins un premier échangeur de chaleur.

Les documents FR2769262, US6311763, US2003056531, DE10336248 ou US2008/245088 décrivent de tels appareils de chauffage, ventilation et/ou climatisation.

Plus particulièrement selon l'invention, le boîtier comprend un canal de circulation d'air, canalisant le flux d'air intérieur dans le boîtier en contournant le premier échangeur de chaleur, et un conduit d'entrée d'air, canalisant le flux d'air intérieur dans le boîtier à travers le premier échangeur de chaleur.

Selon une première variante de réalisation de la présente invention, le canal de circulation d'air comprend une première bouche d'admission raccordée à la première entrée d'air. Avantageusement, la bouche d'admission et la première entrée d'air s'étendent dans un même plan.

De même, selon la première variante de réalisation de la présente invention, la première entrée d'air est apte à recevoir un flux d'air extérieur, provenant de l'extérieur de l'habitacle, et la deuxième entrée d'air est apte à recevoir un flux d'air recyclé, provenant de l'intérieur de l'habitacle.

On comprend donc que, selon la première variante de réalisation de la présente invention, le canal de circulation d'air conduit un flux d'air extérieur introduit dans le boîtier par la première entrée d'air, en provenance de l'extérieur de l'habitacle.

Selon une deuxième variante de réalisation de la présente invention, le canal circulation d'air comprend une bouche d'admission raccordée à la deuxième entrée d'air. Avantageusement, la bouche d'admission et la deuxième entrée d'air s'étendent dans un même plan.

De même, selon la deuxième variante de réalisation de la présente invention, la première entrée d'air est apte à recevoir un flux d'air extérieur, provenant de l'extérieur de l'habitacle, et la deuxième entrée d'air est apte à recevoir un flux d'air recyclé, provenant de l'intérieur de l'habitacle.

On comprend donc que, selon la deuxième variante de réalisation de la présente invention, le canal de circulation d'air conduit un flux d'air recyclé introduit dans le boîtier par la deuxième entrée d'air, en provenance de l'intérieur de l'habitacle.

On comprend donc que, selon la deuxième variante de réalisation de la présente invention, le canal de circulation d'air conduit un flux d'air recyclé introduit dans le boîtier par la deuxième entrée d'air, en provenance de l'intérieur de l'habitacle.

Selon une caractéristique additionnelle de l'invention, la circulation du flux d'air intérieur dans le canal de circulation d'air est contrôlée par un premier volet d'entrée d'air.

Selon une autre caractéristique de l'invention, la circulation du flux d'air intérieur dans le conduit de circulation d'air, en provenance de la première entrée d'air et/ou la deuxième entrée d'air, est contrôlée par un deuxième volet intérieur.

Plus particulièrement, la paroi intérieure s'étend depuis la première entrée d'air jusqu'à un espace du boîtier se trouvant en aval, selon le sens d'écoulement du flux d'air intérieur dans le boîtier, du premier échangeur de chaleur.

Ainsi, la paroi intérieure s'étend jusqu'à la première entrée d'air quand le canal de circulation d'air conduit un flux d'air extérieur, provenant de l'extérieur de l'habitacle.

Avantageusement encore, l'appareil de chauffage, ventilation et/ou climatisation, selon la présente invention, comprend un dispositif de chauffage additionnel installé en amont, selon le sens d'écoulement du flux d'air intérieur dans le boîtier, du premier échangeur de chaleur. Une telle disposition du dispositif de chauffage additionnel en amont du premier échangeur de chaleur permet d'éviter tout risque de givrage du premier échangeur de chaleur, notamment quand la température de du flux d'air intérieur le traversant est faible, en particulier inférieure à 0°C, et contient un fort taux d'humidité.

Selon encore une autre caractéristique de l'invention, le premier échangeur de chaleur est installé en amont, selon le sens d'écoulement du flux d'air intérieur dans le boîtier, d'un groupe moto-ventilateur, destiné à mettre en mouvement le flux d'air intérieur dans le boîtier.

De manière plus précise, le canal de circulation d'air se termine en amont du groupe moto-ventilateur. Autrement dit, le contournement réalisé par le canal de circulation d'air est limité au premier échangeur de chaleur.

En complément, le boîtier loge au moins un deuxième échangeur de chaleur installé, selon le sens d'écoulement du flux d'air intérieur dans le boîtier, en aval du groupe moto-ventilateur.

L'invention couvre également une installation de chauffage, ventilation et/ou climatisation d'un habitacle de véhicule automobile comprenant, d'une part, une boucle de climatisation parcourue par un fluide réfrigérant et comprenant au moins un compresseur, un premier organe de détente, un échangeur de chaleur extérieur, et le premier échangeur de chaleur, et, d'autre part, un appareil de chauffage, ventilation et/ou climatisation tel que défini précédemment.

En complément, la boucle de climatisation comprend le deuxième échangeur de chaleur installé dans le boîtier de l'appareil de chauffage, ventilation et/ou climatisation.

De plus, selon une autre caractéristique de la présente invention, la boucle de climatisation comprend un deuxième organe de détente. Optionnellement, la boucle de climatisation peut comprendre un échangeur de chaleur interne, agencé pour assurer un échange thermique entre le fluide réfrigérant à haute température et le fluide réfrigérant à basse température.

Les avantage de la présente invention résident dans :
- la possibilité de canaliser un flux d'air de manière à ce qu'il pénètre dans l'appareil de chauffage, ventilation et/ou climatisation pour y être chauffé sans pour autant traverser le premier échangeur de chaleur;
- la possibilité d'alléger la charge thermique de la boucle de climatisation utilisée dans un mode dit "chauffage" tout en évitant un risque d'embuage des vitres du véhicule;
- la possibilité de contrôler finement la quantité de flux d'air circulant et contournant le premier échangeur de chaleur, afin d'atteindre un compromis idéal entre la consommation de la boucle de climatisation et risque d'embuage dans l'habitacle;
- une amélioration du confort pour les passagers, en permettant d'accélérer la montée en température de l'habitacle en conditions hivernales; et
- la possibilité de réduire le poids, la taille et le coût des composants de la boucle de climatisation utilisés pour réaliser une fonction de chauffage.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 montre un appareil de chauffage, ventilation et/ou climatisation selon une première variante de réalisation de la présente invention, et
- la figure 2 montre un appareil de chauffage, ventilation et/ou climatisation selon une deuxième variante de réalisation de la présente invention.

Par convention, les termes "amont" et "aval" sont à interpréter à la lumière du sens de circulation d'un fluide auquel il est relatif.

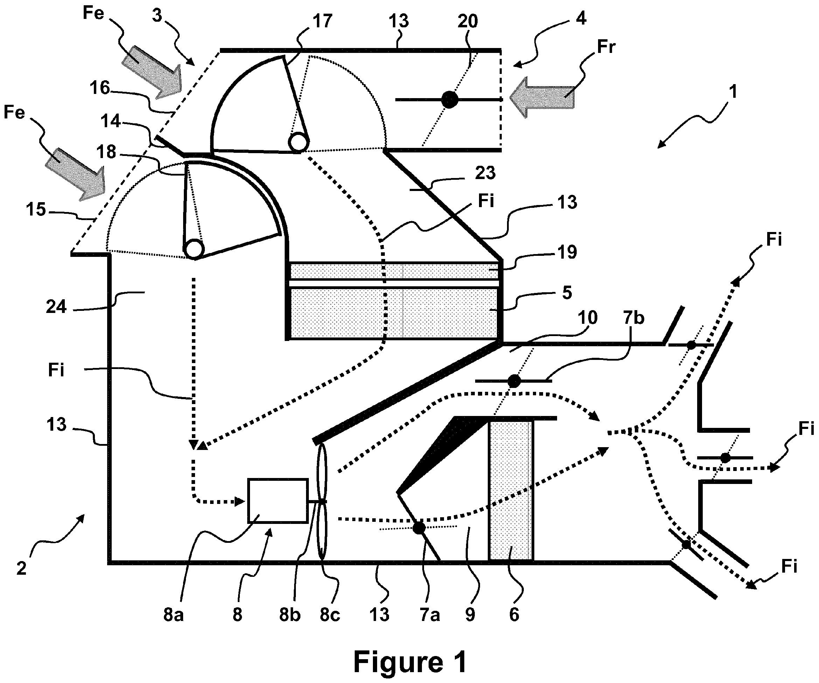

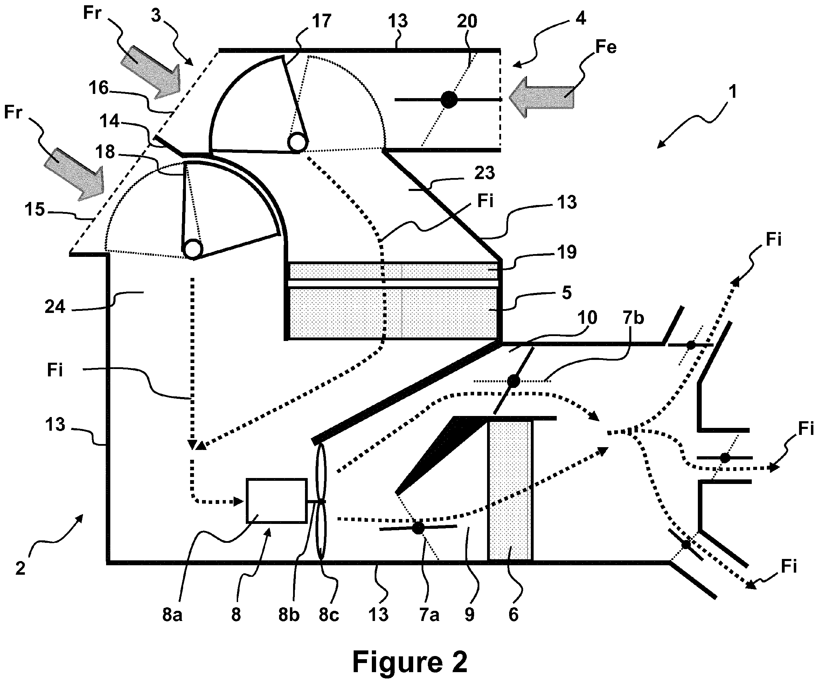

Les figures 1 et 2 illustrent un appareil de chauffage, ventilation et/ou climatisation 1, apte à être monté dans un véhicule automobile pour assurer une distribution d'un flux d'air intérieur Fi, à température adaptée. Le flux d'air intérieur Fi est susceptible d'être froid, chaud ou tempéré, en fonction des demandes des occupants du véhicule.

L'appareil de chauffage, ventilation et/ou climatisation 1 comprend un boîtier 2 délimitant une enceinte de l'appareil de chauffage, ventilation et/ou climatisation 1. Le boîtier 2 forme ainsi une enveloppe, de préférence en plastique, notamment réalisée par l'assemblage de plusieurs pièces distinctes.

Le boîtier 2 canalise le flux d'air intérieur Fi entre au moins une entrée d'air et une sortie d'air. De manière plus précise, le flux d'air intérieur Fi est composé d'un mélange d'un flux d'air extérieur Fe et/ou d'un flux d'air recyclé Fr, en proportion variable.

Par définition, le flux d'air extérieur Fe est un flux d'air prélevé à l'extérieur de l'habitacle du véhicule, et le flux d'air recyclé Fr est un flux d'air prélevé à l'intérieur de l'habitacle du véhicule.

A cet effet, le boîtier 2 comprend au moins une première entrée d'air 3 et une deuxième entrée d'air 4 agencées pour permettre une admission du flux d'air extérieur Fe et/ou du flux d'air recyclé Fr.

La première entrée d'air 3 et la deuxième entrée d'air 4 peuvent être ouvertes ou fermées, en toute ou partie, par des moyens de commande, afin de permettre l'admission du flux d'air extérieur Fe et/ou du flux d'air recyclé Fr, en proportion variable.

Dans une première alternative, la première entrée d'air 3 et la deuxième entrée d'air 4 sont agencées de sorte que le boîtier 2 reçoit uniquement le flux d'air extérieur Fe. Dans une deuxième alternative, la première entrée d'air 3 et la deuxième entrée d'air 4 sont agencées de sorte que le boîtier 2 reçoit uniquement le flux d'air recyclé Fr. Selon d'autres exemples, la première entrée d'air 3 et la deuxième entrée d'air 4 sont agencées de sorte que le boîtier 2 reçoit le flux d'air extérieur Fe et le flux d'air recyclé Fr, en proportion variable.

On comprend ainsi que la première entrée d'air 3 et la deuxième entrée d'air 4 reçoivent chacune un flux d'air d'origine distincte.

Le boîtier 2 sert également de support mécanique pour divers composants d'une boucle de climatisation permettant d'assurer le traitement thermique du flux d'air intérieur Fi. Par exemple, le boîtier 2 loge un premier échangeur de chaleur 5 et un deuxième échangeur de chaleur 6 installés dans le boîtier 2 de l'appareil de chauffage, ventilation et/ou climatisation 1 de sorte à être traversé par le flux d'air intérieur Fi.

Les divers composants de la boucle de climatisation installés dans le boîtier 2 de l'appareil de chauffage, ventilation et/ou climatisation 1, notamment le premier échangeur de chaleur 5 et le deuxième échangeur de chaleur 6, permettent de modifier les paramètres aérothermiques du flux d'air intérieur Fi, afin qu'il soit conditionné en adéquation des paramètres de confort souhaités par les occupants du véhicule.

Préférentiellement, le premier échangeur de chaleur 5 est distinct du deuxième échangeur de chaleur 6, au moins pour leurs parties s'étendant dans le boîtier 2.

Selon une première variante de réalisation, la fonction du premier échangeur de chaleur 5 est de refroidir le flux d'air intérieur Fi le traversant. Autrement dit, le premier échangeur de chaleur 5 fonctionne en tant qu'évaporateur.

Le premier échangeur de chaleur 5 est utilisé dans un mode de fonctionnement dit "refroidissement" dans lequel le flux d'air intérieur Fi est refroidi préalablement à sa distribution dans l'habitacle, afin d'abaisser la température de l'habitacle du véhicule, en particulier pendant les périodes pendant lesquelles la température extérieure est élevée, c'est-à-dire en saisons chaudes.

Le premier échangeur de chaleur 5 est également utilisé dans un mode de fonctionnement dit "déshumidification" dans lequel le flux d'air intérieur Fi est asséché préalablement à sa distribution dans l'habitacle, en particulier afin d'éviter un embuage des vitres de l'habitacle. Avantageusement, dans le mode de fonctionnement dit "déshumidification", l'assèchement du flux d'air intérieur Fi est assuré par le premier échangeur de chaleur 5 en le refroidissant.

Selon la première variante de réalisation, la fonction du deuxième échangeur de chaleur 6 est de chauffer le flux d'air intérieur Fi le traversant. Autrement dit, le deuxième échangeur de chaleur 6 fonctionne en tant que radiateur.

Le deuxième échangeur de chaleur 6 est utilisé en dans un mode de fonctionnement dit "chauffage" dans lequel le flux d'air intérieur Fi est chauffé préalablement à sa distribution dans l'habitacle, afin d'augmenter la température de l'habitacle du véhicule, en particulier pendant les périodes pendant lesquelles la température extérieure est basse, c'est-à-dire en saisons froides.

Le deuxième échangeur de chaleur 6 est également utilisé dans le mode de fonctionnement dit "déshumidification" dans lequel le flux d'air intérieur Fi est asséché, par le premier échangeur de chaleur 5, puis chauffé, par le deuxième échangeur de chaleur 6, préalablement à sa distribution dans l'habitacle. Un tel agencement permet de disposer d'un habitacle chauffé en évitant l'embuage des vitres de l'habitacle.

Le premier échangeur de chaleur 5, respectivement le deuxième échangeur de chaleur 6, peut, par exemple, être un échangeur de chaleur du type fluide réfrigérant/air, permettant un échange thermique entre un fluide réfrigérant, circulant dans la boucle de climatisation, et le flux d'air intérieur Fi, canalisé dans le boîtier 2.

Alternativement, le premier échangeur de chaleur 5, respectivement le deuxième échangeur de chaleur 6, peut, par exemple, être un échangeur de chaleur du type fluide caloporteur/air, permettant un échange thermique entre un fluide caloporteur et le flux d'air intérieur Fi, canalisé dans le boîtier 2.

Alternativement également, le premier échangeur de chaleur 5, respectivement le deuxième échangeur de chaleur 6, peut, par exemple, être un échangeur de chaleur du type fluide réfrigérant/fluide caloporteur, permettant un échange thermique entre le fluide réfrigérant, circulant dans la boucle de climatisation, et le flux d'air intérieur Fi, canalisé dans le boîtier 2 par l'intermédiaire du fluide caloporteur.

Particulièrement, le premier échangeur de chaleur 5, respectivement le deuxième échangeur de chaleur 6, du type fluide caloporteur/air, peut faire partie d'une boucle secondaire, dans laquelle circule le fluide caloporteur, afin d'assurer la fonction de transport de calories ou de frigories depuis la boucle de climatisation jusqu'au flux d'air intérieur Fi circulant dans le boîtier 2 de l'appareil de chauffage, ventilation et/ou climatisation 1.

Alternativement, le premier échangeur de chaleur 5, respectivement le deuxième échangeur de chaleur 6, du type fluide caloporteur/air, peut faire partie d'un circuit caloporteur, comportant une source de chauffage (par exemple un dispositif de chauffage, notamment électrique, un moteur, notamment un moteur thermique, une batterie, ...) ou une source de froid. Le fluide caloporteur circule dans le circuit caloporteur afin d'assurer la fonction de transport de calories ou de frigories depuis la source de chauffage ou la source de froid jusqu'au flux d'air intérieur Fi circulant dans le boîtier 2 de l'appareil de chauffage, ventilation et/ou climatisation 1.

Préférentiellement, le premier échangeur de chaleur 5 et le deuxième échangeur de chaleur 5 tirent les calories ou les frigories de la boucle de climatisation permettant la circulation du fluide réfrigérant suivant un cycle thermodynamique déterminé. Le premier échangeur de chaleur 5 et le deuxième échangeur de chaleur 6 sont donc agencés pour dissiper, dans le flux d'air intérieur Fi, un flux thermique (calories ou frigories), généré lors du cycle thermodynamique dans la boucle de climatisation.

Le premier échangeur de chaleur 5 est installé dans un conduit d'entrée d'air 23, ménagé dans le boîtier 2. Plus particulièrement, le conduit d'entrée d'air 23 est disposé en aval, selon le sens d'écoulement du flux d'air intérieur Fi dans le boîtier 2, de la première entrée d'air 3 et de la deuxième entrée d'air 4. Ainsi, le conduit d'entrée d'air 23 est susceptible de canaliser le flux d'air intérieur Fi constitué du flux d'air extérieur Fe et/ou du flux d'air recyclé Fr. En conséquence, selon la configuration des moyens de commande de la première entrée d'air 3 et de la deuxième entrée d'air 4, le premier échangeur de chaleur 5 est donc traversé par le flux d'air extérieur Fe ou le flux d'air recyclé Fr ou un mélange du flux d'air extérieur Fe et du flux d'air recyclé Fr.

Selon la présente invention, le conduit d'entrée d'air 23 est délimité par une paroi extérieure 13 du boîtier 2 et par une paroi intérieure 14, aménagée dans le boîtier 2. La paroi intérieure 14 est agencée dans le boîtier 2 de sorte à partager une partie du volume intérieur du boîtier 2. La paroi intérieure 14 définit donc, également, avec la paroi extérieure 13 du boîtier 2, un canal de circulation d'air 24.

Le boîtier 2 est donc configuré de sorte que la paroi intérieure 14 est disposée entre le canal de circulation d'air 24 et le conduit d'entrée d'air 23. Selon l'invention, la paroi intérieure 14 est disposée entre le premier échangeur de chaleur 5, agencé dans le conduit d'entrée d'air 23, et le canal de circulation d'air 24.

Selon l'invention, la paroi intérieure 14 s'étend depuis la première entrée d'air 3, afin de séparer le flux d'air entrant par la première entrée d'air 3 en un premier flux d'air, canalisé vers le conduit d'entrée d'air 23 à travers le premier échangeur de chaleur 5, et un deuxième flux d'air, canalisé par le canal de circulation d'air 24 en contournant le premier échangeur de chaleur 5.

Le boîtier 2 comporte également un premier canal de transmission d'air 9 et un deuxième canal de transmission d'air 10. Avantageusement, le premier canal de transmission d'air 9 et le deuxième canal de transmission d'air 10 sont disposés en aval, selon le sens d'écoulement du flux d'air intérieur dans le boîtier 2, du conduit d'entrée d'air 23 et du canal de circulation d'air 24.

Selon la présente invention, le premier canal de transmission d'air 9 loge le deuxième échangeur de chaleur 6 et le deuxième canal de transmission d'air 10 est disposé en parallèle du premier canal de transmission d'air 9.

Ainsi, le flux d'air intérieur Fi est canalisé par le premier canal de transmission d'air 9, afin de le traverser le deuxième échangeur de chaleur 6, et est canalisé par le deuxième canal de transmission d'air 10, afin de contourner le deuxième échangeur de chaleur 6.

Le boîtier 2 comporte également des moyens de mixage 7, réalisés, par exemple, par au moins un volet de mixage. Plus particulièrement, l'exemple de réalisation présenté à la figure 1, les moyens de mixage 7 sont constitués par un premier volet de mixage 7a, agencé dans le premier canal de transmission d'air 9, et un deuxième volet de mixage 7b, agencé dans le deuxième canal de transmission d'air 10.

Les moyens de mixage 7 permettent de calibrer le flux d'air intérieur Fi canalisé dans le premier canal de transmission d'air 9 et dans le deuxième canal de transmission d'air 10.

Selon une première alternative de réalisation, le premier échangeur de chaleur 5 est l'évaporateur de la boucle de climatisation et le deuxième échangeur de chaleur 6 est un radiateur ou un refroidisseur de gaz, ou condenseur, de la boucle de climatisation. Selon cet agencement, le premier canal de transmission d'air 9 est un canal d'air "chaud" et le deuxième canal de transmission d'air 10 est un canal d'air "froid".

Les moyens de mixage 7 prennent diverses positions afin de calibrer le flux d'air intérieur Fi dans le premier canal de transmission d'air 9 et dans le deuxième canal de transmission d'air 10. Ainsi, en aval du premier canal de transmission d'air 9 et dans le deuxième canal de transmission d'air 10, le flux d'air intérieur Fi résulte d'un mélange de flux d'air issus du canal d'air "chaud" et du canal d'air "froid".

Selon l'exemple de réalisation présenté à la figure 1, la configuration du premier volet de mixage 7a et du deuxième volet de mixage 7b présentée à la figure 1 est telle que le flux d'air intérieur Fi contourne intégralement le deuxième échangeur de chaleur 6.

Le flux d'intérieur Fi est mis en mouvement dans le boîtier 2 par un groupe moto-ventilateur 8, monté dans le boîtier 2. Plus spécifiquement, le groupe moto-ventilateur 8 est chargé de mettre en mouvement le flux d'air intérieur Fi circulant dans le boîtier 2. Autrement dit, le groupe moto-ventilateur 8 est agencé dans le boîtier 2 de sorte à faire circuler le flux d'air intérieur Fi provenant de l'extérieur de l'habitacle, ou flux d'air extérieur Fe, et/ou provenant de l'intérieur de l'habitacle, ou flux d'air recyclé Fr.

Le groupe moto-ventilateur 8 comprend un moteur électrique 8a entraînant en rotation une hélice 8b via un arbre 8c.

Selon l'exemple non limitatif de réalisation de la figure 1, le premier échangeur de chaleur 5 est agencé, dans le boîtier 2, en amont du conduit d'entrée d'air 23 et du canal de circulation d'air 24, selon le sens d'écoulement du flux d'air intérieur Fi dans le boîtier 2. En conséquence, le groupe moto-ventilateur 8 aspire le flux d'air intérieur Fi issu du canal de circulation d'air 24 et/ou du conduit d'entrée d'air 23 ayant traversé la premier échangeur de chaleur 5.

Par ailleurs, selon l'exemple non limitatif de réalisation de la figure 1, le deuxième échangeur de chaleur 6 est installé en aval du groupe moto-ventilateur 8, selon le sens d'écoulement du flux d'air intérieur Fi dans le boîtier 2. Le groupe moto-ventilateur 8 propulse donc le flux d'air intérieur Fi vers le deuxième échangeur de chaleur 6. Le groupe moto-ventilateur 8 est donc intercalé, dans le boîtier 2, entre le premier échangeur de chaleur 5 et le deuxième échangeur de chaleur 6, du point de vue de l'écoulement du flux d'air intérieur Fi.

Selon la présente invention, la paroi intérieure 14, aménagée dans le boîtier 2, définit une séparation à l'intérieur du boîtier 2, afin que le flux d'air intérieur Fi puisse être canalisé dans le conduit d'entrée d'air 23, afin de traverser le premier échangeur de chaleur 5, ou dans le canal de circulation d'air 24, afin de contourner le premier échangeur de chaleur 5,

Telle que détaillée précédemment, la paroi intérieure 14 s'étend depuis le premier échangeur de chaleur 5 jusqu'à la première entrée d'air 3. Ainsi, la première entrée d'air 3 est divisée une première bouche d'admission d'air 15, raccordée au canal de circulation d'air 24, et une deuxième bouche d'admission d'air 16, raccordée au conduit d'entrée d'air 23.

Le canal de circulation d'air 24 comporte à une de ses extrémités la première bouche d'admission d'air 15 délimitée par une portion ouverte du boîtier 2 s'étendant entre la paroi extérieure 13 et la paroi intérieure 14.

Selon un exemple de réalisation, la première bouche d'admission d'air 15 et la première entrée d'air 3 sont coplanaires. De même, la deuxième bouche d'admission d'air 16 et la première entrée d'air 3 sont coplanaires.

De manière alternative, la présente invention couvre également le cas où la première bouche d'admission 15 et la première entrée d'air 3 sont agencés selon deux plans distincts reliés par une partie de la paroi extérieure 13. De façon similaire, la deuxième bouche d'admission d'air 16 et la première entrée d'air 3 sont agencés selon deux plans distincts reliés par une partie de la paroi extérieure 13.

Le boîtier 2 de l'appareil de chauffage, ventilation et/ou climatisation 1 comprend également des moyens de commande, afin d'autoriser ou interdire une circulation du flux d'air à travers de la première entrée d'air 3 et de la deuxième entrée d'air 4.

Selon l'exemple de réalisation présentée à la figure 1, la première entrée d'air 3 et/ou la deuxième entrée d'air 4 sont en communication avec le premier échangeur de chaleur 5 via le conduit d'entrée d'air 23. Autrement dit, le premier échangeur de chaleur 5 est susceptible d'être traversé par le flux d'air recyclé, par le flux d'air extérieur ou par un mélange du flux d'air recyclé Fr et du flux d'air extérieur Fe.

Le mélange du flux d'air recyclé Fr et du flux d'air extérieur Fe est assuré par un premier volet d'entrée d'air 17, placé dans le boîtier 2. Le premier volet d'entrée d'air 17 contrôle la proportion du flux d'air recyclé Fr et du flux d'air extérieur Fe envoyés vers le premier échangeur de chaleur 5. Dans l'exemple de réalisation de la figure 1, le premier volet d'entrée d'air 17 est un volet dit 'tambour'. Toutefois, la présente invention couvre d'autres types de volets, notamment un volet dit 'drapeau', un volet dit 'papillon', ...

Le premier volet d'entrée d'air 17 est représenté en trait plein dans une première position extrême, dans laquelle il ferme la deuxième bouche d'admission d'air 16 de la première entrée d'air 3 et ouvre la deuxième entrée d'air 4. La deuxième position extrême du premier volet d'entrée d'air 17 est représentée en pointillés. Dans la deuxième position extrême, le premier volet d'entrée d'air 17 ouvre la deuxième bouche d'admission d'air 16 de la première entrée d'air 3 et ferme la deuxième entrée d'air 4. Toutefois, le premier volet d'entrée d'air 17 est susceptible de prendre également des positions intermédiaires entre la première position extrême et la deuxième position extrême afin de permettre l'admission du flux d'air extérieur Fe et du flux d'air recyclé Fr dans le conduit d'entrée d'air 23.

De plus, le boîtier 2 comporte également un deuxième volet d'entrée d'air 18 chargé de contrôler l'admission du flux d'air dans le canal de circulation d'air 24. Selon l'exemple de réalisation de la figure 1, le deuxième volet d'entrée d'air 18 est un volet dit 'tambour'. Toutefois, la présente invention couvre d'autres types de volets, notamment un volet dit 'drapeau', un volet dit 'papillon', ...

Avantageusement, le deuxième volet d'entrée d'air 18 est disposé au droit de la première bouche d'admission d'air 15, c'est-à-dire immédiatement au niveau de l'entrée du canal de circulation d'air 24.

Favorablement, dans le cadre de réalisation de la figure 1, le deuxième volet d'entrée d'air 18 étant un volet dit 'tambour', la paroi intérieure 14 présente une forme arrondie complémentaire à la forme du deuxième volet d'entrée d'air 18. La forme arrondie de la paroi intérieure 14 délimite une zone de dégagement du deuxième volet d'entrée d'air 18, quand celui-ci autorise l'introduction du flux d'air dans le canal de circulation d'air 24.

Le deuxième volet d'entrée d'air 18 est représenté en trait plein dans une première position extrême, dans laquelle il ouvre la première bouche d'admission d'air 15 de la première entrée d'air 3. La deuxième position extrême du deuxième volet d'entrée d'air 18 est représentée en pointillés. Dans la deuxième position extrême, le deuxième volet d'entrée d'air 18 ferme la première bouche d'admission d'air 15 de la première entrée d'air 3. Toutefois, le deuxième volet d'entrée d'air 18 est susceptible de prendre également des positions intermédiaires entre la première position extrême et la deuxième position extrême afin de calibrer l'admission du flux d'air le canal de circulation d'air 24.

De plus, selon une alternative particulière, un troisième volet d'entrée d'air 20 peut être agencé dans le boîtier 2 de l'appareil de chauffage, ventilation et/ou climatisation 1, afin de permettre un ajustement du flux d'air extérieur Fe et/ou du flux d'air recycle Fr.

Enfin, optionnellement, selon la présente invention, le boîtier 2 de l'appareil de chauffage, ventilation et/ou climatisation 1 comprend un dispositif de chauffage additionnel 19. Préférentiellement, le dispositif de chauffage additionnel 19 est installé en amont du premier échangeur de chaleur 5, selon le sens d'écoulement du flux d'air intérieur Fi dans le boîtier 2. Le dispositif de chauffage additionnel 19 s'étend, par exemple, dans un plan parallèle à un plan d'extension du premier échangeur de chaleur 5.

En particulier, le dispositif de chauffage additionnel 19 est un radiateur électrique, tel qu'un radiateur électrique, par exemple à effet CTP (Coefficient à Température Positive), par exemple alimenté par le réseau de bord du véhicule. La tension du réseau de bord du véhicule peut être 12 Volts mais il est avantageux d'alimenter le radiateur électrique sous une tension comprise entre 80 Volts et 600 Volts.

Le dispositif de chauffage additionnel 19 apporte les calories nécessaires au flux d'air intérieur Fi pour éviter l'apparition de givre sur le premier échangeur de chaleur 5.

Selon une première variante de réalisation de la présente invention, la première entrée d'air 3 permet l'admission du flux d'air extérieur Fe et la deuxième entrée d'air 4 permet l'admission du flux d'air recycle Fr. Une telle configuration est présentée à la figure 1.

Selon l'agencement de la figure 1, le premier volet d'entrée d'air 17 interdit l'admission du flux d'air extérieur Fe dans le boîtier 2 pour traverser le premier échangeur de chaleur 5 tout en autorisant un accès total du flux d'air recyclé Fr dans le conduit d'entrée d'air 23 vers le premier échangeur de chaleur 5. Dans cette configuration, le deuxième volet d'entrée d'air 18 autorise l'admission du flux d'air extérieur Fe dans le boîtier 2. Le flux d'air extérieur Fe est canalisé dans le canal de circulation d'air 24.

Par suite, le flux d'air intérieur Fi est aspiré par le groupe moto-ventilateur 8. Le flux d'air intérieur Fi est alors propulsé vers une partie du boîtier 2 logeant le deuxième échangeur de chaleur 6.

Selon une deuxième variante de réalisation de la présente invention, la première entrée d'air 3 permet l'admission du flux d'air recyclé Fr et la deuxième entrée d'air 4 permet l'admission du flux d'air extérieur Fe. Une telle configuration est présentée à la figure 2.

La description qui va être faite de la figure 2 présente les différences par rapport à la première variante de réalisation selon la figure 1. On se reportera donc à la description faite ci-dessous pour les éléments ou composants identiques. Sur la figure 2, les éléments identiques, à ceux de la figure 1, portent les mêmes numéros de référence. Sauf mention contraire, les éléments identiques sur la figure 1 et la figure 2, ont donc les mêmes caractéristiques techniques et opèrent selon les mêmes modalités de fonctionnement.

Comme pour la variante de réalisation de la présente invention selon la figure 1, l'origine du flux d'air recyclé Fr et l'origine du flux d'air extérieur Fe sont distinctes.

Dans l'exemple de réalisation de la figure 2, la première entrée d'air 3 est agencée pour recevoir le flux d'air recyclé Fr, en provenance de l'intérieur de l'habitacle du véhicule, et la deuxième entrée d'air 4 est agencée pour recevoir le flux d'air extérieur Fe, en provenance de l'extérieur de l'habitacle du véhicule.

Selon la deuxième variante de réalisation de la présente invention, le canal de circulation d'air 24 contournant le premier échangeur de chaleur 5 est parcouru par un flux d'air recyclé Fr, provenant exclusivement de l'intérieur de l'habitacle.

D'autre part, le conduit d'entrée d'air 23, le premier échangeur de chaleur 5 est agencé pour recevoir soit le flux d'air recyclé Fr, soit le flux d'air extérieur Fe, soit un mélange du flux d'air recyclé Fr et du flux d'air extérieur Fe.

De façon complémentaire ou alternative, selon la deuxième variante de réalisation de la présente invention, en mode dit "chauffage", la fonction du premier échangeur de chaleur 5 a pour fonction de chauffer le flux d'air intérieur Fi. A cet effet, le premier échangeur de chaleur 5 agit comme un radiateur assurant un préchauffage du flux d'air intérieur Fi. Le deuxième échangeur de chaleur 6 réalise alors un chauffage complémentaire.

L'agencement de la présente invention selon la deuxième variante de réalisation présente l'avantage de mixer l'origine du flux d'air intérieur Fi. On réalise alors, d'une part, un échange thermique entre le flux d'air recyclé Fr et le deuxième échangeur de chaleur 6 et, d'autre part, un échange thermique entre le flux d'air recyclé et/ou le flux d'air extérieur Fe et le premier échangeur de chaleur 5.

Un tel agencement permet de maintenir un coefficient de performance élevé de la boucle de climatisation dans le mode dit "chauffage".

L'invention couvre encore le fait que l'appareil de chauffage, ventilation et/ou climatisation 1 se combine avec une boucle de climatisation (non représentée) parcourue par un fluide réfrigérant et monté sur le véhicule automobile pour former un ensemble de conditionnement thermique de l'habitacle.

Le premier échangeur de chaleur 5 et le deuxième échangeur de chaleur 6 sont ainsi des composants constitutifs de la boucle de climatisation:
- dite "directe", quand le premier échangeur de chaleur 5 et le deuxième échangeur de chaleur 6 sont des échangeurs de chaleurs du type fluide réfrigérant/air, permettant un échange thermique entre le fluide réfrigérant, circulant dans la boucle de climatisation, et le flux d'air intérieur Fi, canalisé dans le boîtier 2, ou
- dite "indirecte" quand le premier échangeur de chaleur 5 et/ou le deuxième échangeur de chaleur 6 sont des échangeurs de chaleurs du type fluide refrigérant/fluide caloporteur, permettant un échange thermique entre le fluide réfrigérant, circulant dans la boucle de climatisation, et le flux d'air intérieur Fi, canalisé dans le boîtier 2 par l'intermédiaire du fluide caloporteur.

A cet effet, la boucle de climatisation comprend, notamment, selon le sens d'écoulement du fluide réfrigérant, un compresseur, le deuxième échangeur de chaleur 6, un premier organe de détente, le premier échangeur de chaleur 5, optionnellement un deuxième organe de détente, et un échangeur de chaleur extérieur, agencé pour réaliser un échange thermique entre le fluide réfrigérant et le flux d'air extérieur Fe.

En complément, la boucle de climatisation comprend également un échangeur de chaleur interne agencé pour assurer un échange thermique entre le fluide réfrigérant à haute température et le fluide réfrigérant à basse température, cet échangeur de chaleur intérieur pouvant former un module quand il est combiné à un accumulateur,

Une telle boucle de climatisation est adaptée pour fonctionner au moins selon le mode dit "chauffage", le mode dit "refroidissement" et/ou le mode dit "déshumidification".

A titre d'exemple, dans le mode dit "chauffage", le premier échangeur de chaleur 5 et le deuxième échangeur de chaleur 6 sont au même niveau de pression de fluide réfrigérant, puisque le premier organe de détente ne crée pas d'abaissement de pression. Une telle configuration de la boucle de climatisation est particulièrement adaptée à la deuxième variante de réalisation de la présente invention, telle que détaillée à la figure 2.

Dans le mode dit "refroidissement" et dans le mode dit "déshumidification", le premier organe de détente met en oeuvre un abaissement de pression du fluide réfrigérant en aval du deuxième échangeur de chaleur 6 et en amont du premier échangeur de chaleur 5. Le premier échangeur de chaleur 5 se comporte alors comme un évaporateur. Une telle configuration de la boucle de climatisation est particulièrement adaptée à la première variante de réalisation de la présente invention, telle que détaillée à la figure 1.

La présente invention concerne également une installation de chauffage, ventilation et/ou climatisation comprenant une boucle de climatisation et un appareil de chauffage, ventilation et/ou climatisation, tels que décrits précédemment.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment, pris séparément ou en association.

En particulier, la présente invention couvre, notamment, un appareil de chauffage, ventilation et/ou climatisation 1 pour un habitacle d'un véhicule automobile comprenant un boîtier 2 canalisant le flux d'air intérieur Fi et logeant au moins le premier échangeur de chaleur 5 et le deuxième échangeur de chaleur 6. Le boîtier 2 comprend une première entrée d'air 3 et une deuxième entrée d'air 4. De plus, selon cette alternative de réalisation, le boîtier 2 intègre un premier canal de circulation d'air destiné à canaliser le flux d'air extérieur Fe en contournant le premier échangeur de chaleur 5 et un deuxième canal de circulation d'air destiné à canaliser le flux d'air recyclé Fr en contournant le premier échangeur de chaleur 5.

## Revendications

1. Appareil de chauffage, ventilation et/ou climatisation (1) pour un habitacle d'un véhicule automobile comprenant un boîtier (2) comportant une première entrée d'air (3) et une deuxième entrée d'air (4) et canalisant un flux d'air intérieur (Fi) provenant de la première entrée d'air (3) et/ou de la deuxième entrée d'air (4), le boîtier (2) logeant au moins un premier échangeur de chaleur (5),
le boîtier (2) comprenant
- un canal de circulation d'air (24), canalisant le flux d'air intérieur (Fi) dans le boîtier (2) en contournant le premier échangeur de chaleur (5), et
- un conduit d'entrée d'air (23), canalisant le flux d'air intérieur (Fi) dans le boîtier (2) à travers le premier échangeur de chaleur (5),
le conduit d'entrée d'air (23) étant délimité par une paroi extérieure (13) du boîtier (2) et par une paroi intérieure (14), aménagée dans le boîtier (2), ladite paroi intérieur (14) étant disposée entre le premier échangeur de chaleur (5), agencé dans le conduit d'entrée d'air (23), et le canal de circulation d'air (24), **caractérisé en ce que** la paroi intérieure (14) s'étend depuis la première entrée d'air (3), afin de séparer le flux d'air entrant par la première entrée d'air (3) en un premier flux d'air, canalisé vers le conduit d'entrée d'air (23) à travers le premier échangeur de chaleur (5), et un deuxième flux d'air, canalisé par le canal de circulation d'air (24) en contournant le premier échangeur de chaleur (5).

2. Appareil de chauffage, ventilation et/ou climatisation (1) selon la revendication 1, dans lequel le canal de circulation d'air (24) comprend une bouche d'admission (15) raccordée à la deuxième entrée d'air (4).

3. Appareil de chauffage, ventilation et/ou climatisation (1) selon la revendication 1 ou 2, dans lequel le canal de circulation d'air (24) comprend une bouche d'admission (15) raccordée à la première entrée d'air (3).

4. Appareil de chauffage, ventilation et/ou climatisation (1) selon l'une quelconque des revendications précédentes, dans lequel la première entrée d'air (3) est apte à recevoir un flux d'air recyclé (Fr), provenant de l'intérieur de l'habitacle, et dans lequel la deuxième entrée d'air (4) est agencée pour recevoir un flux d'air extérieur (Fe), provenant de l'extérieur de l'habitacle.

5. Appareil de chauffage, ventilation et/ou climatisation (1) selon l'une quelconque des revendications 1 à 3, dans lequel la première entrée d'air (3) est apte à recevoir un flux d'air extérieur (Fe), provenant de l'extérieur de l'habitacle, et dans lequel la deuxième entrée d'air (4) est agencée pour recevoir un flux d'air recyclé (Fr), provenant de l'intérieur de l'habitacle.

6. Appareil de chauffage, ventilation et/ou climatisation (1) selon l'une quelconque des revendications précédentes, dans lequel la circulation du flux d'air intérieur (Fi) dans le canal de circulation d'air (24) est contrôlée par un premier volet d'entrée d'air (17).

7. Appareil de chauffage, ventilation et/ou climatisation (1) selon l'une quelconque des revendications précédentes, dans lequel la circulation du flux d'air intérieur (Fi) dans le conduit d'entrée d'air (23) en provenance de la première entrée d'air (3) et/ou la deuxième entrée d'air (4) est contrôlée par un deuxième volet d'entrée d'air (18).

8. Appareil de chauffage, ventilation et/ou climatisation (1) selon l'une quelconque des revendications précédentes, dans lequel un dispositif de chauffage additionnel (19) est installé en amont du premier échangeur de chaleur (5), selon le sens d'écoulement du flux d'air intérieur (Fi) dans le boîtier (2).

9. Appareil de chauffage, ventilation et/ou climatisation (1) selon l'une quelconque des revendications précédentes, dans lequel le premier échangeur (5) est installé en amont, selon le sens d'écoulement du flux d'air intérieur (Fi) dans le boîtier (2), d'un groupe moto-ventilateur (8), destiné à mettre en mouvement le flux d'air intérieur (Fi) dans le boîtier (2).

10. Appareil de chauffage, ventilation et/ou climatisation (1) selon l'une revendication 8, dans lequel le boîtier (2) loge au moins un deuxième échangeur de chaleur (6) installé en aval selon le sens d'écoulement du flux d'air intérieur (Fi) dans le boîtier (2), du groupe moto-ventilateur (8).

11. Installation de chauffage, ventilation et/ou climatisation (1) d'un habitacle de véhicule automobile comprenant
- une boucle de climatisation parcourue par un fluide réfrigérant et comprenant au moins un compresseur, un premier organe de détente, un échangeur de chaleur extérieur, et le premier échangeur de chaleur (5) et
- d'autre part, un appareil de chauffage, ventilation et/ou climatisation (1) selon l'une quelconque des revendications précédentes

12. Installation de chauffage, ventilation et/ou climatisation (1) d'un habitacle de véhicule automobile selon la revendication 11, dans laquelle la boucle de climatisation comprend un deuxième échangeur de chaleur (6) installé dans le boîtier (2) de l'appareil de chauffage, ventilation et/ou climatisation (1).

13. Installation de chauffage, ventilation et/ou climatisation (1) d'un habitacle de véhicule automobile selon la revendication 11 à 12, dans laquelle la boucle de climatisation comprend un deuxième organe de détente et/ou un échangeur de chaleur interne, agencé pour assurer un échange thermique entre le fluide réfrigérant à haute température et le fluide réfrigérant à basse température.

## Patentansprüche

1. Heizungs-, Lüftungs- und/oder Klimatisierungsgerät (1) für einen Innenraum eines Kraftfahrzeugs, das ein Gehäuse (2) enthält, welches einen ersten Lufteintritt (3) und einen zweiten Lufteintritt (4) aufweist und einen inneren Luftstrom (Fi) kanalisiert, der vom ersten Lufteintritt (3) und/oder vom zweiten Lufteintritt (4) kommt, wobei mindestens ein erster Wärmetauscher (5) im Gehäuse (2) untergebracht ist,
wobei das Gehäuse (2) enthält
- einen Luftumwälzungskanal (24), der den inneren Luftstrom (Fi) im Gehäuse (2) kanalisiert, indem er den ersten Wärmetauscher (5) umrundet, und
- eine Lufteintrittsleitung (23), die den inneren Luftstrom (Fi) im Gehäuse (2) durch den ersten Wärmetauscher (5) hindurch kanalisiert,
die Lufteintrittsleitung (23) von einer Außenwand (13) des Gehäuses (2) und von einer im Gehäuse (2) angeordneten Innenwand (14) begrenzt wird, wobei die Innenwand (14) zwischen dem in der Lufteintrittsleitung (23) angeordneten ersten Wärmetauscher (5) und dem Luftumwälzungskanal (24) angeordnet ist, dadurch gekeenzeichnet die Innenwand (14) sich vom ersten Lufteintritt (3) aus erstreckt, um den inneren Luftstrom (Fi) in einen ersten Luftstrom, der zur Lufteintrittsleitung (23) durch den ersten Wärmetauscher (5) kanalisiert wird, und einen zweiten Luftstrom zu trennen, der vom Luftumwälzungskanal (24) kanalisiert wird, indem er ersten Wärmetauscher (5) umrundet.

2. Heizungs-, Lüftungs- und/oder Klimatisierungsgerät (1) nach Anspruch 1, wobei der Luftumwälzungskanal (24) eine Einlassöffnung (15) enthält, die an den zweiten Lufteintritt (4) angeschlossen ist.

3. Heizungs-, Lüftungs- und/oder Klimatisierungsgerät (1) nach Anspruch 1 oder 2, wobei der Luftumwälzungskanal (24) eine Einlassöffnung (15) enthält, die an den ersten Lufteintritt (3) angeschlossen ist.

4. Heizungs-, Lüftungs- und/oder Klimatisierungsgerät (1) nach einem der vorhergehenden Ansprüche, wobei der erste Lufteintritt (3) einen rückgeführten Luftstrom (Fr) empfangen kann, der von innerhalb des Innenraums kommt, und wobei der zweite Lufteintritt (4) eingerichtet ist, um einen äußeren Luftstrom (Fe) zu empfangen, der von außerhalb des Innenraums kommt.

5. Heizungs-, Lüftungs- und/oder Klimatisierungsgerät (1) nach einem der Ansprüche 1 bis 3, wobei der erste Lufteintritt (3) einen äußeren Luftstrom (Fe) empfangen kann, der von außerhalb des Innenraums kommt, und wobei der zweite Lufteintritt (4) eingerichtet ist, um einen rückgeführten Luftstrom (Fr) zu empfangen, der von innerhalb des Innenraums kommt.

6. Heizungs-, Lüftungs- und/oder Klimatisierungsgerät (1) nach einem der vorhergehenden Ansprüche, wobei die Umwälzung des inneren Luftstroms (Fi) im Luftumwälzungskanal (24) von einer ersten Lufteintrittsklappe (17) gesteuert wird.

7. Heizungs-, Lüftungs- und/oder Klimatisierungsgerät (1) nach einem der vorhergehenden Ansprüche, wobei die Umwälzung des inneren Luftstroms (Fi) in der Lufteintrittsleitung (23) vom ersten Lufteintritt (3) und/oder vom zweiten Lufteintritt (4) kommend von einer zweiten Lufteintrittsklappe (18) gesteuert wird.

8. Heizungs-, Lüftungs- und/oder Klimatisierungsgerät (1) nach einem der vorhergehenden Ansprüche, wobei eine zusätzliche Heizvorrichtung (19) stromaufwärts vor dem ersten Wärmetauscher (5) gemäß der Fließrichtung des inneren Luftstroms (Fi) im Gehäuse (2) eingebaut ist.

9. Heizungs-, Lüftungs- und/oder Klimatisierungsgerät (1) nach einem der vorhergehenden Ansprüche, wobei der erste Tauscher (5) stromaufwärts, gemäß der Fließrichtung des inneren Luftstroms (Fi) im Gehäuse (2), vor einer Gebläseeinheit (8) eingebaut ist, die dazu bestimmt ist, den inneren Luftstrom (Fi) im Gehäuse (2) in Bewegung zu versetzen.

10. Heizungs-, Lüftungs- und/oder Klimatisierungsgerät (1) nach Anspruch 8, wobei im Gehäuse (2) mindestens ein zweiter Wärmetauscher (6) untergebracht ist, der stromabwärts, gemäß der Fließrichtung des inneren Luftstroms (Fi) im Gehäuse (2), hinter der Gebläseeinheit (8) eingebaut ist.

11. Heizungs-, Lüftungs- und/oder Klimatisierungsanlage (1) eines Kraftfahrzeug-Innenraums, die enthält
- einen Klimatisierungskreislauf, der von einem Kühlfluid durchflossen wird und mindestens einen Kompressor, ein erstes Expansionsorgan, einen äußeren Wärmetauscher und den ersten Wärmetauscher (5) enthält, und
- andererseits ein Heizungs-, Lüftungs- und/oder Klimatisierungsgerät (1) nach einem der vorhergehenden Ansprüche.

12. Heizungs-, Lüftungs- und/oder Klimatisierungsanlage (1) eines Kraftfahrzeug-Innenraums nach Anspruch 11, wobei der Klimatisierungskreislauf einen zweiten Wärmetauscher (6) enthält, der in das Gehäuse (2) des Heizungs-, Lüftungs- und/oder Klimatisierungsgeräts (1) eingebaut ist.

13. Heizungs-, Lüftungs- und/oder Klimatisierungsanlage (1) eines Kraftfahrzeug-Innenraums nach Anspruch 11 bis 12, wobei der Klimatisierungskreislauf ein zweites Expansionsorgan und/oder einen inneren Wärmetauscher enthält, der eingerichtet ist, um einen Wärmeaustausch zwischen dem Kühlfluid auf hoher Temperatur und dem Kühlfluid auf niedriger Temperatur zu gewährleisten.

## Claims

1. Heating, ventilation and/or air-conditioning apparatus (1) for a passenger compartment of a motor vehicle including a casing (2) including a first air inlet (3) and a second air inlet (4) and channeling an interior air flow (Fi) coming from the first air inlet (3) and/or the second air inlet (4), the casing (2) accommodating at least a first heat exchanger (5),
the casing (2) including:
- an air circulation channel (24) channeling the interior air flow (Fi) in the casing (2) so that it bypasses the first heat exchanger (5), and
- an air inlet duct (23) channeling the interior air flow (Fi) in the casing (2) through the first heat exchanger (5),
the air inlet duct (23) is delimited by an exterior wall (13) of the casing (2) and an interior wall (14) arranged in the casing (2), said interior wall (14) being between the first heat exchanger (5) in the air inlet duct (23) and the air circulation channel (24), **characterized in that** the interior wall (14) extends from the first air inlet (3), in order to separate the air flow entering via the first air inlet (3) into a first air flow channeled toward the air inlet duct (23) through the first heat exchanger (5) and a second air flow channeled by the air circulation channel (24) and bypassing the first heat exchanger (5).

2. Heating, ventilation and/or air-conditioning apparatus (1) according to Claim 1, wherein the air circulation channel (24) includes an intake (15) connected to the second air inlet (4).

3. Heating, ventilation and/or air-conditioning apparatus (1) according to Claim 1 or 2, wherein the air circulation channel (24) includes an intake (15) connected to the first air inlet (3).

4. Heating, ventilation and/or air-conditioning apparatus (1) according to any one of the preceding claims, wherein the first air inlet (3) is adapted to receive a recycled air flow (Fr) coming from the interior of the passenger compartment and the second air inlet (4) is adapted to receive an exterior air flow (Fe) coming from the exterior of the passenger compartment.

5. Heating, ventilation and/or air-conditioning apparatus (1) according to any one of Claims 1 to 3, wherein the first air inlet (3) is adapted to receive an exterior air flow (Fe) coming from the exterior of the passenger compartment and the second air inlet (4) is adapted to receive a recycled air flow (Fr) coming from the interior of the passenger compartment.

6. Heating, ventilation and/or air-conditioning apparatus (1) according to any one of the preceding claims, wherein the circulation of the interior air flow (Fi) in the air circulation channel (24) is controlled by a first air inlet flap (17).

7. Heating, ventilation and/or air-conditioning apparatus (1) according to any one of the preceding claims, wherein the circulation of the interior air flow (Fi) in the air inlet duct (23) coming from the first air inlet (3) and/or the second air inlet (4) is controlled by a second air inlet flap (18).

8. Heating, ventilation and/or air-conditioning apparatus (1) according to any one of the preceding claims, wherein an additional heating device (19) is installed on the upstream side of the first heat exchanger (5) relative to the direction of flow of the interior air flow (Fi) in the casing (2).

9. Heating, ventilation and/or air-conditioning apparatus (1) according to any one of the preceding claims, wherein the first heat exchanger (5) is installed on the upstream side, relative to the direction of flow of the interior air flow (Fi) in the casing (2), of an electric fan (8) adapted to move the interior air flow (Fi) in the casing (2).

10. Heating, ventilation and/or air-conditioning apparatus (1) according to Claim 8, wherein the casing (2) accommodates at least a second heat exchanger (6) installed on the downstream side, relative to the direction of flow of the interior air flow (Fi) in the casing (2), of the electric fan (8).

11. Heating, ventilation and/or air-conditioning installation (1) of a motor vehicle passenger compartment, including:
- an air-conditioning loop through which passes a coolant fluid and which includes at least a compressor, a first expansion unit, an exterior heat exchanger and the first heat exchanger (5), and
- on the other hand, the heating, ventilation and/or air-conditioning apparatus (1) according to any one of the preceding claims.

12. Heating, ventilation and/or air-conditioning installation (1) according to Claim 11 of a motor vehicle passenger compartment, wherein the air-conditioning loop includes a second heat exchanger (6) installed in the casing (2) of the heating, ventilation and/or air-conditioning apparatus (1).

13. Heating, ventilation and/or air-conditioning installation (1) according to Claim 11 or 12 of a motor vehicle passenger compartment, wherein the air-conditioning loop includes a second expansion unit and/or an internal heat exchanger adapted to provide an exchange of heat between the coolant fluid at high temperature and the coolant fluid at low temperature.
